# EUROPÄISCHE PATENTSCHRIFT

(11) **EP 1 182 034 B1**
(45) Veröffentlichungstag und Bekanntmachung des Hinweises auf die Patenterteilung: **17.05.2006**
(21) Anmeldenummer: 01119017.0
(22) Anmeldetag: 07.08.2001
(51) Int. Cl.: B41F 13/008

(54) **Vorrichtung zur Tilgung von Torsionsschwingungen im Antrieb einer Bogenoffset-Rotationsdruckmaschine**
Device for damping torsional vibrations in the drive unit of a rotary offset printing machine for sheets
Dispositif pour amortir des vibrations de torsion de l'entraînement d'une rotative d'impression offset pour feuilles

(30) Priorität: 22.08.2000 DE 10041025
(43) Veröffentlichungstag der Anmeldung: 27.02.2002
(73) Patentinhaber: MAN Roland Druckmaschinen AG, 63075 Offenbach (DE)
(72) Erfinder: Wiese, Holger, Dr., 63179 Obertshausen (DE); Gensheimer, Valentin, 63165 Mühlheim/Main (DE)

(56) Entgegenhaltungen:
- DD-A- 130 321

## Beschreibung

Die Erfindung betrifft eine Vorrichtung zur Tilgung von Torsionsschwingungen im Antrieb einer Druckmaschine, wobei mindestens ein auf eine bestimmte Erregerordnung des Drehfrequenzbereichs des Antriebs abgestimmtes physikalisches Pendel mit einer oder mehreren Drehmassen des Antriebs drehbar verbunden ist, wobei das Pendel in einem Aufhängeabstand L von der Drehachse des Antriebs aufgehängt ist und eine Pendellänge I aufweist.

Eine Vorrichtung der angegebenen Art ist aus DD 130 321 bekannt. Sie dient dazu, im Antrieb der Druckmaschine auftretende Drehschwingungen im gesamten Drehfrequenzbereich der Druckmaschine soweit zu beseitigen, daß eine Qualitätsminderung der Druckerzeugnisse infolge von Torsionsschwingungen im Antrieb vermieden wird. Bei einem Mehrfach-Offset-Druckwerk ist hierbei vorgesehen, daß mit jedem aus Antriebszahnrädern für die Zylinder der einzelnen Druckwerke bestehenden, geschlossenen Räderzug oder den dazugehörigen Zylindern der Druckwerke selbst mindestens zwei paarweise angeordnete Pendel oder ein Pendel in Kombination mit einer Ausgleichsmasse gekoppelt sind. Die Pendel sind als Bifilar- oder Rollpendel ausgebildet.

Es sind weiterhin Druckmaschinen bekannt, bei denen der Hauptantrieb ein Keilriemengetriebe mit in der Regel mehreren parallel angeordneten Keilriemen aufweist: Es wurde gefunden, daß hierbei die Umlaufordnung der Keilriemen die Druckqualität beeinflussende Erregerordnungen erzeugt. Die Tilgung dieser Erregerordnungen bereitet in der Praxis besondere Schwierigkeit, da die Eigenschaften der Keilriemen in gewissem Umfang variieren und die hiervon abhängigen Erregerordnungen sich daher nicht exakt vorherbestimmen lassen. Auch können sich im Laufe des Betriebs für die Druckqualität relevante Änderungen der Erregerordnungen ergeben.

Der Erfindung liegt die Aufgabe zugrunde, eine Vorrichtung der eingangs genannten Art zu schaffen, welche eine wirksame Tilgung der für die Druckqualität relevanten Ordnungen der Torsionsschwingungen, insbesondere auch die des Keilriemenantriebs, ermöglicht.

Diese Aufgabe wird erfindungsgemäß dadurch gelöst, daß der Aufhängeabstand L des Pendels und/oder die Pendellänge I einstellbar sind. Die Einstellbarkeit wird vorzugsweise dadurch erreicht, daß das Pendel mittels einstellbarer Exzenterbolzen oder Exzenterlager an einem Rotor des Antriebs drehbar gelagert ist.

Je nach Zuordnung der Exzenterbolzen oder der Exzenterlager kann durch diese entweder der Aufhängeabstand L oder die Pendellänge I eingestellt werden. Werden Exzenterbolzen und Exzenterlager miteinander kombiniert, so lassen sich sowohl Aufhängeabstand L als auch Pendellänge I einstellen.

Durch die Einstellbarkeit des Aufhängeabstands L bzw. der Pendellänge ist eine genaue Abstimmung der Schwingungstilgung auf die an der jeweiligen Druckmaschine auftretenden und die Druckqualität beeinflussenden Erregerordnungen möglich. Durch Material oder Fertigungsunterschiede bedingte Abweichungen der zu tilgenden Erregerordnungen von dem Wert, für den das Pendel berechnet ist, können daher auf einfach Weise kompensiert werden.

Nach einem weiteren Vorschlag der Erfindung hat sich als besonders vorteilhaft erwiesen wenn das Pendel an der abtriebseitigen Riemenscheibe eines in dem Antrieb angeordneten Riemengetriebes gelagert ist. Die dort üblicherweise höhere Drehzahl erleichtert die Tilgerabstimmung äuf die Riemenumlaufordnung und ermöglicht dadurch eine einfache Lagerung des Fliehkraftpendels. Auf die Sonderform eines Rollpendels oder eines Zweifadenpendels kann verzichtet werden. Vorzugsweise weist die Tilgungsvorrichtung an der antriebsseitigen Riemenscheibe vier einfach auf einem Exzenterbolzen gelagerte Pendel auf, die zum Unwuchtausgleich jeweils paarweise gegenüberliegend angeordnet sind.

Die Aufhängung der Fliehkraftpendel kann vorteilhafterweise auch mittels piezokeramischer Bauelemente oder anderer linear wirkender, elektrisch verstellbarer und radial zu einem Rotor ausgerichteter Elemente erfolgen.

Vorteilhaft ist die Erfindung bei Kurvengetrieben, insbesondere mit Haupt- und Beiläuferkurve einsetzbar. Die Tilgermassen können auf einfache Weise in den Bauraum zwischen den Kurven aufgenommen werden.

Um höhere Ordnungen von Schwingungen zu tilgen, kann nach einem weiteren Vorschlag der Erfindung vorgesehen sein, das Fliehkraftpendel an schneller laufende Rotoren im Antriebssystem der Druckmaschine anzukoppeln. Daraus ergeben sich konstruktiv besser realisierbare Verhältnisse I:L. So kann beispielsweise bei einer Anordnung des Pendels im Bereich des Farbwerks die durch den Heberschlag hervorgerufene Erregerordnung getilgt werden, wobei sich die räumliche Nähe der Pendelanordnung zum Entstehungsort des Heberschlags vorteilhaft auswirkt.

Die Erfindung wird nachfolgend anhand eines Ausführungsbeispiels näher erläutert, das in der Zeichnung dargestellt ist.

Es zeigen:

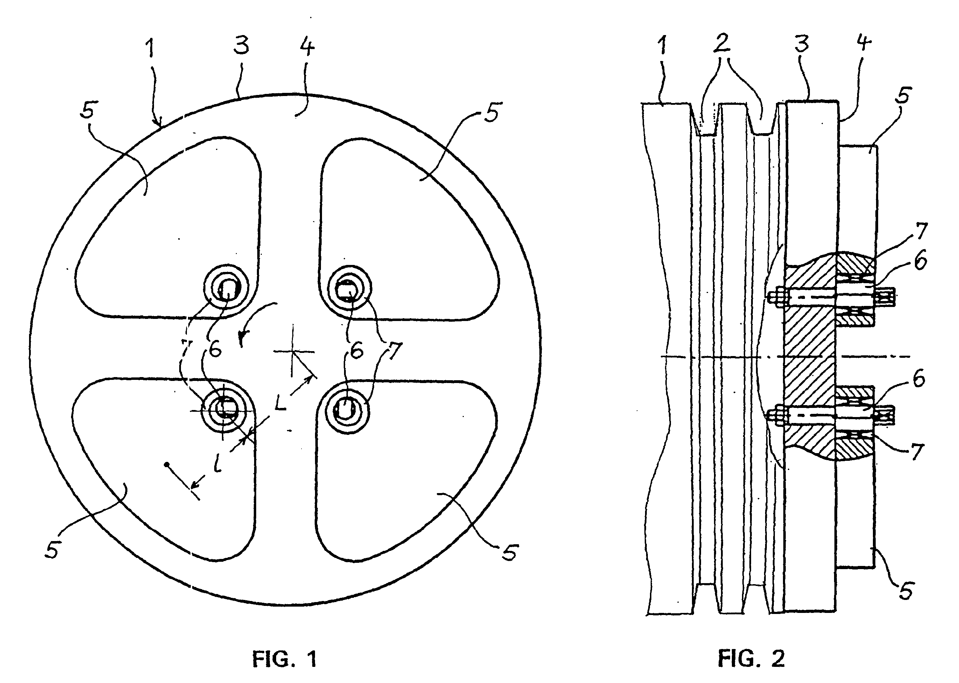

- Figur 1: eine Draufsicht auf eine Riemenscheibe mit vier daran angeordneten Fliehkraftpendeln,
- Figur 2: eine Seitenansicht, teilsweise geschnitten, der Riemenscheibe gemäß Figur 1,
- Figur 3: eine Variante der Erfindung an einen Kurvengetriebe, und
- Figur 4: eine Schnittansicht des Kurventriebes nach Figur 3.

Die in der Zeichnung dargestellte Riemenscheibe 1 ist für einen Keilriementrieb bestimmt und weist mehrere Keilnuten 2 für die Aufnahme von Keilriemen auf. An einer Stirnseite ist die Riemenscheibe 1 mit einer Schwungscheibe 3 drehfest verbunden, die auf ihrer außentiegenden Scheibenfläche 4 vier Fliehkraftpendel 5 trägt. Die Fliehkraftpendel 5 sind jeweils baugleich und im gleichen Teilungsabstand voneinander angeordnet. Sie sind auf Exzenterbolzen 6 mittels Wälzlagern 7 drehbar gelagert, die an der Schwungscheibe 3 verstellbar befestigt sind. Durch Verstellen der Exzenterbolzen 6 kann der Aufhängeabstand L zwischen der Lagerung der Fliehkraftpendel 5 und der Drehachse der Riemenscheibe 1 eingestellt und dadurch ein Feinabgleich zwischen der Tilgerfrequenz der Fliehkraftpendel 5 und der Frequenz der durch den Riemenumlauf hervorgerufenen Torsionsschwingungen erreicht werden. Durch unterschiedliche Einstellungen des Aufhängeabstands L der beiden Paare von gegenüberliegenden Fliehkraftpendeln 5 kann der Frequenzbereich, in dem die Vorrichtung wirksam ist, vergrößert werden.

Soll auch die Pendellänge I der Fliehkraftpendel 5 einstellbar sein, so können, zB. anstelle der Wälzlager 7 in den Fliehkraftpendeln 5 Exzenterbuchsen angeordnet sein, die gegenüber den Fliehkraftpendeln 5 einstellbar sind.

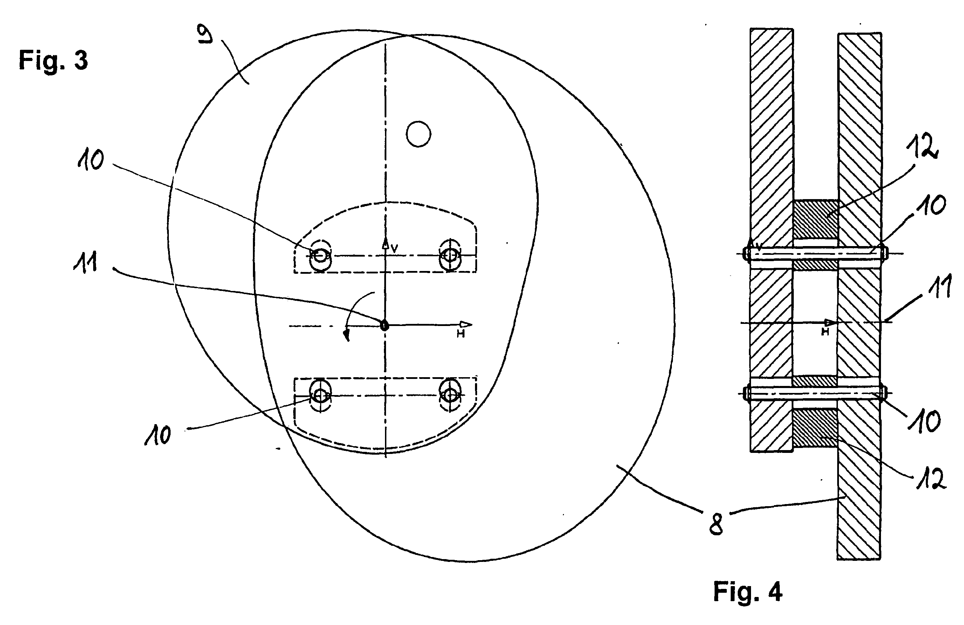

In einer anderen Ausführungsform kann gemäß Fig. 3 ein Paar Fliehkraftpendel 12 in einem Kurventrieb angeordnet sein. Hier treten große Ungleichförmigkeiten des Antriebs auf. Die gezeigte Ausführungsform weist eine Hauptkurve 8 und eine Beiläuferkurve 9 auf. Die Beiläuferkurve 9 dient dazu, die Ungleichförmigkeit im Antrieb der Hauptkurve 8 dadurch zu verringern, dass die den Kontakt Kurvenscheibe-Rolle sichernden Federkräfte reduziert werden und so eine erste Form der Schwingungsberuhigung erzielt wird. Die Beiläuferkurve 9 wirkt dabei im wesentlichen entgegengesetzt zum Bewegungsgesetz der Hauptkurve 8. Die Kurvenäste wirken dabei gegenseitig unterstützend, indem ein beschleunigender Bewegungsverlauf auf einer Kurve durch einen bremsenden Bewegungsverlauf der anderen Kurve ergänzt wird. Dazu sind an Haupt- 8 und Beiläuferkurve 9 über Rollenhebel Kurvenrollen, meistens angefedert, abgestützt. Die Bauform erfordert einen Abstand zwischen beiden Kurven, um die Bewegung der Rollenhebel zu ermöglichen.

Der so entstehende Bauraum zwischen Haupt- 8 und Beiläuferkurve 9 kann, wie dies in Fig. 4 gezeigt wird, zur Anbringung von beispielsweise zwei Fliehkraftpendeln 12 genutzt werden. Die Fliehkraftpendel 12 können auf zwischen der Haupt- 8 und der Beiläuferkurve 9 angeordneten Verbindungsbolzen 10 aufgesetzt sein, wobei die Haupt- 8 und die Beiläuferkurve 9 auf einer gemeinsamen Achse 11 montiert sind. Die Verbindungsbolzen 10 können wie oben beschrieben exzentrisch verstellbar sein, so dass der Aufhängeabstand L und/oder die Pendellänge I der Fliehkraftpendel 12 einstellbar sind.

Vorteilhafterweise kann ein Fliehkraftpendel 5, 12 in seinem Aufhängeabstand L oder auch in der Pendellänge I durch den Einsatz von im Aufhängepunkt angeordneten piezokeramischen Bauelementen einstellbar aufgehängt sein. Dabei wird mittels einer elektrischen Steuerung die lineare Ausdehnung der piezokeramischen Bauelemente in radialer Richtung des Fliehkraftpendels 5, 12 über eine angelegte Spannung verändert. Die bei diesen Bauelementen möglichen relativ kleinen Längenänderungen reichen aus, um die notwendigen Tilgungswirkungen auf die vorkommende Schwingungen entstehen zu lassen.

Anstatt piezokeramischer Bauelemente können auch andere elektrisch steuerbare Antriebselemente zur Erzeugung kleiner Hübe eingesetzt werden.

### Bezugszeichenliste

- Riemenscheibe: 1
- Keilnuten: 2
- Schwungscheibe: 3
- Scheibenfläche: 4
- Fliehkraftpendel: 5
- Exzenterbolzen: 6
- Wälzlagern: 7
- Aufhängeabstand: L
- Pendellänge: I
- Hauptkurve: 8
- Beiläuferkurve: 9
- Verbindungsbolzen: 10
- Achse: 11
- Fliehkraftpendel: 12

## Patentansprüche

1. Vorrichtung zur Tilgung von Torsionsschwingungen im Antrieb einer Druckmaschine, insbesondere einer Bogenoffset-Rotationsdruckmaschine, wobei mindestens ein auf eine bestimmte Erregerordnung des Drehfrequenzbereichs des Antriebs abgestimmtes physikalisches Pendel (5) mit einer oder mehreren Drebmassen (1-4) des Antriebs drehbar verbunden ist, wobei das Pendel (5) in einem Aufhängeabstand L von der Drehachse des Antriebs aufgehängt ist und eine Pendellänge I aufweist,
**dadurch gekennzeichnet,**
**daß** der Aufhängeabstand (L) des Pendels (5) und/oder die Pendellänge (I) einstellbar sind.

2. Vorrichtung nach Anspruch 1,
**dadurch gekennzeichnet,**
**daß** das Fliehkraftpendel (5; 12) mittels einstellbarer Exzenterbolzen (6) oder Exzenterlager an einem Rotor des Antriebs drehbar gelagert ist.

3. Vorrichtung nach Anspruch 1,
**dadurch gekennzeichnet,**
**daß** das Fliehkraftpendel (5; 12) mittels einstellbarer Linearantriebe radial verschiebbar an einem Rotor des Antriebs gelagert ist.

4. Vorrichtung nach Anspruch 3,
**dadurch gekennzeichnet,**
**daß** das Fliehkraftpendel (5) mittels piezokeramischer Antriebsmittel oder anderer elektrisch einstellbar steuerbarer Antriebsmittel in seinem wirksamen Aufhängeabstand (L) und / oder seiner Pendellänge (I) einstellbar ausgestaltet ist.

5. Vorrichtung nach Anspruch 1 bis 4
**dadurch gekennzeichnet,**
**daß** das Fliehkraftpendel (5) an der abtriebseitigen Riemenscheibe (1) eines in dem Antrieb angeordneten Riemengetriebes gelagert ist.

6. Vorrichtung nach Anspruch 1 bis 4,
**dadurch gekennzeichnet,**
**daß** die Tilgungsvorrichtung an der antriebsseitigen Riemenscheibe (1) vier einfach auf jeweils einem Exzenterbolzen (6) gelagerte Fliehkraftpendel (5) aufweist, die zum Unwuchtausgleich jeweils paarweise gegenüberliegend angeordnet sind.

7. Vorrichtung nach Anspruch 1 bis 4,
**dadurch gekennzeichnet,**
**daß** ein Fliehkraftpendel (12) in einen Kurvenmechanismus integriert ist, der eine Haupt- (8) und eine Beiläuferkurve (9) aufweist, wobei der Bauraum zwischen den beiden Kurven für die Anordnung der Tilgermassen genutzt wird.

8. Vorrichtung nach einem der vorhergehenden Ansprüche,
**dadurch gekennzeichnet,**
**daß** die Ankopplung des Fliehkraftpendels (5; 12) an einem Rotor erfolgt, der schneller als die Druckwerkzylinder rotiert.

## Claims

1. Device for damping torsional vibrations in the drive of a printing press, in particular a sheet-fed rotary offset press, at least one physical pendulum (5) matched to a specific exciter order of the rotational frequency range of the drive being connected to one or more rotary masses (1-4) of the drive such that it can rotate, the pendulum (5) being suspended at a suspension distance L from the axis of rotation of the drive and having a pendulum length 1, **characterized in that** the suspension distance (L) of the pendulum (5) and/or the pendulum length (1) are adjustable.

2. Device according to Claim 1, **characterized in that** the centrifugal force pendulum (5; 12) is mounted on a rotor of the drive such that it can rotate by means of adjustable eccentric bolts (6) or eccentric bearings.

3. Device according to Claim 1, **characterized in that** the centrifugal force pendulum (5; 12) is mounted on a rotor of the drive such that it can be displaced radially by means of adjustable linear drives.

4. Device according to Claim 3, **characterized in that** the centrifugal force pendulum (5) is configured to be adjustable in its effective suspension distance (L) and/or its pendulum length (1) by means of piezo-ceramic drive means or other electrically adjustably controllable drive means.

5. Device according to Claims 1 to 4, **characterized in that** the centrifugal force pendulum (5) is mounted on the belt pulley (1) on the output drive side of a belt mechanism arranged in the drive.

6. Device according to Claims 1 to 4, **characterized in that** the damping device on the belt pulley (1) on the drive side has four centrifugal force pendulums (5) simply mounted on an eccentric bolt (6) in each case, which are each arranged opposite one another in pairs in order to compensate for imbalance.

7. Device according to Claims 1 to 4, **characterized in that** a centrifugal force pendulum (12) is integrated into a cam mechanism which has a main cam (8) and an auxiliary cam (9), the installation space between the two cams being used for the arrangement of the damper masses.

8. Device according to one of the preceding claims, **characterized in that** the centrifugal force pendulum (5; 12) is coupled to a rotor which rotates more quickly than the printing unit cylinders.

## Revendications

1. Dispositif pour amortir des vibrations de torsion de l'entraînement d'une machine d'impression, notamment d'une rotative d'impression offset pour feuilles, dans lequel au moins un pendule physique (5) adapté à un ordre d'excitation déterminé de la plage de fréquences de rotation de l'entrainement est connecté de manière rotative à une ou plusieurs masses rotatives (1 - 4) de l'entrainement, le pendule (5) étant accroché à une distance d'accrochage L de l'axe de rotation de l'entrainement et présentant une longueur de pendule 1,
**caractérisé en ce que**
la distance d'accrochage (L) du pendule (5) et/ou la longueur de pendule (1) peuvent être ajustées.

2. Dispositif selon la revendication 1,
**caractérisé en ce que**
le pendule à force centrifuge (5 ; 12) est monté de manière rotative au moyen de tourillons d'excentrique ajustables (6) ou de paliers d'excentrique sur un rotor de l'entraînement.

3. Dispositif selon la revendication 1,
**caractérisé en ce que**
le pendule à force centrifuge (5; 12) est monté au moyen d'entraînements linéaires ajustables de manière déplaçable radialement sur un rotor de l'entraînement.

4. Dispositif selon la revendication 3,
**caractérisé en ce que**
le pendule à force centrifuge (5) est configuré de manière à pouvoir ajuster sa distance d'accrochage effective (L) et/ou sa longueur de pendule (1) au moyen de moyens d'entraînement piézocéramiques ou d'autres moyens d'entraînement commandables ajustables électriquement.

5. Dispositif selon l'une quelconque des revendications 1 à 4,
**caractérisé en ce que**
le pendule à force centrifuge (5) est monté sur la poulie à courroie (1) du côté de la sortie d'une transmission à courroie disposée dans l'entraînement.

6. Dispositif selon l'une quelconque des revendications 1 à 4,
**caractérisé en ce que**
le dispositif d'amortissement présente sur la poulie à courroie (1) du côté de l'entraînement quatre pendules à force centrifuge (5) montés respectivement sur un tourillon d'excentrique (6), lesquels sont disposés par paires opposées en vue de compenser les déséquilibres.

7. Dispositif selon l'une quelconque des revendications 1 à 4,
**caractérisé en ce**
**qu'**un pendule à force centrifuge (12) est intégré dans un mécanisme à came qui présente une came principale (8) et une came secondaire (9), l'espace de construction entre les deux cames étant utilisé pour l'agencement des masses d'amortissement.

8. Dispositif selon l'une quelconque des revendications précédentes,
**caractérisé en ce que**
l'accouplement du pendule à force centrifuge (5 ; 12) est réalisé sur un rotor qui tourne plus vite que le cylindre du dispositif d'impression.
